# EUROPEAN PATENT APPLICATION

(11) **EP 3 989 157 A1**
(43) Date of publication of application: **27.04.2022**
(21) Application number: 19953287.0
(22) Date of filing: 22.11.2019
(51) Int. Cl.: G06Q 50/18, G06Q 40/00

(54) **SYSTEM AND METHOD FOR SHARING RIGHTS TO BE RECEIVED**

(30) Priority: 18.11.2019 KR 20190147608
(71) Applicant: Yang, Hong Sun, Seoul 07322 (KR)
(72) Inventor: Yang, Hong Sun, Seoul 07322 (KR)
(74) Representative: Dehns
(86) International application number: PCT/KR2019/016078
(87) International publication number: WO 2021/100922

(57) **Abstract**

The present invention relates to an online sharing system for a warrant to receive and a sharing method of receivable right, which can issue digital warrants with respect to the corresponding right by separating just the right to receive royalty to be receivable in the future, namely, a receivable right of royalty in connection with sales or business profits, depending on a rightful person's exercise of intangible assets or intellectual property right without dividing the corresponding property right or registering joint ownership of the corresponding property right to a holder of intellectual property rights, such as patent rights, trademark rights and copyrights, or a holder of franchise values, fishing rights, mining rights, and so on which belong to intangible assets, issue dedicated electronic money so that issuers and buyers can conveniently trade them in one-to-one exchange with currencies of wanted countries, let transaction participants share their shares of receivable right by a method to limit the quantity, trading units and the sum total of electronic money and issue digital warrants as many as the limited quantity, set a predetermined ratio assuming that sales or business profits will occur using the corresponding intangible assets or intellectual property rights, decide payment of royalty to be receivable, for instance, 100%, assign shares of the issued digital warrants to the transaction participants in proportional distribution according to sizes of purchase capital with respect to the corresponding right, and split the corresponding right by shares to the third party to make resale possible, thereby making it possible to assign or trade the right to freely receive royalty to the third party without infringement of licenses for the right holder's intellectual property rights or intangible assets by the third party, and provides the third party, who purchased the receivable right of the royalty that only the intellectual property right holder or the holder of the intangible assets have received, or a resale buyer, who purchased the right from the third buyer who purchased the right from the property right holder, with graded payment of royalties at a ratio assigned to the buyers who purchased the receivable right, out of ratios of payment of royalty receivable in the future relative to the entire sales registered and presented in the right sharing system by the intellectual property right holder by automated computing, in relation with sales or business profits generated by using the corresponding intellectual property rights or intangible assets.

## Description

### [Technical Field]

The present invention relates to an online sharing system for a warrant to receive and a sharing method of receivable right.

In more detail, the present invention relates to an online sharing system for a warrant to receive and a sharing method of receivable right, which can issue digital warrants with respect to the corresponding right by separating just the right to receive royalty to be receivable in the future, namely, a receivable right of royalty in connection with sales or business profits, depending on a rightful person's exercise of intangible assets or intellectual property right without dividing the corresponding property right or registering joint ownership of the corresponding property right to a holder of intellectual property rights, such as patent rights, trademark rights and copyrights, or a holder of franchise values, fishing rights, mining rights, and so on which belong to intangible assets, issue dedicated electronic money so that issuers and buyers can conveniently trade them in one-to-one exchange with currencies of wanted countries, let transaction participants share their shares of receivable right by a method to limit the quantity, trading units and the sum total of electronic money and issue digital warrants as many as the limited quantity, set a predetermined ratio assuming that sales or business profits will occur using the corresponding intangible assets or intellectual property rights, decide payment of royalty to be receivable, for instance, 100%, assign shares of the issued digital warrants to the transaction participants in proportional distribution according to sizes of purchase capital with respect to the corresponding right, and split the corresponding right by shares to the third party to make resale possible, thereby making it possible to assign or trade the right to freely receive royalty to the third party without infringement of licenses for the right holder's intellectual property rights or intangible assets by the third party, and provides the third party, who purchased the receivable right of the royalty that only the intellectual property right holder or the holder of the intangible assets have received, or a resale buyer, who purchased the right from the third buyer who purchased the right from the property right holder, with graded payment of royalties at a ratio assigned to the buyers who purchased the receivable right, out of ratios of payment of royalty receivable in the future relative to the entire sales registered and presented in the right sharing system by the intellectual property right holder by automated computing, in relation with sales or business profits generated by using the corresponding intellectual property rights or intangible assets.

### [Background Art]

In general, intangible assets are formless assets which are contrasted to tangible assets like machines, buildings and cash. The intangible assets have no physical entities but let a holder of the intangible assets expect actual profits in the future by holding the assets.

The intangible assets are divided into a franchise value as an economic asset, and an industrial property right, a mining right, a fishing right, and a leasehold which are legal rights.

The industrial property right includes patent right, utility model right, design right and trademark right, the mining right means right to be obtained by mining registered minerals in a mining area and other minerals existing in a copper deposit, the fishing right is the right to monopolistically and exclusively manage fishing industry above a predetermined surface of water, and the leasehold is the right to use other's land or obtain profits by paying the rent.

Moreover, because fiscal expenditure effects of a company have an influence in the next term, starting expenses and development expenses capitalized in the meantime to be distributed as the next costs also belong to intangible assets.

Various technologies for transacting such intangible assets have been developed, and there are patent literatures 1 to 3 for example.

Conventional transaction of intangible assets is that individuals or companies (right holders) holding intangible assets raise their own capital and do production activities using a method of making their intangible assets belong to companies or various organizations or groups in order to do creative activities or economic activities using their own specified intangible assets. However, there are many cases that such intangible assets are used by capitalists regardless of intangible asset holders' original intentions in an industrialization stage due to the capitalists' tyranny and voting rights.

As described above, because the original right holders are partitioned and fixed by the financiers, the intangible asset holders are transferred or registered to be partitioned in their ownership of the corresponding intangible assets, so they may be limited in their intention or license by others (new right holders) when the original right holders exercise their license.

Meanwhile, there are bonds with warrant (BW) as transaction of securities. The bonds with warrant are issued in the form of a bond, and bond holders can claim shares at a predetermined price after a period of time. Warrant means a right to transact the specified quantity of shares, credits, and foreign exchanges at contracted prices, and bonds which are granted with right to buy shares of an issuing company are called bonds with warrant. Such bonds with warrant are generally divided into credits that holders can receive fixed interest and stock options, the credits and the stock options may be transacted separately, and if a warrant holder requests shares, the company generally issues and delivers new shares.

Creditors can obtain capital gains by exercising their warrants when the share price of the issuing company exceeds the contracted purchase price, but otherwise, the creditors can give up the warrants. In this instance, the creditors have to pay interest income taxes, the shareholders have to pay share exchange taxes and income taxes for dividend, and they can secure a fixed rate of credits and obtain capital gains of the shares.

The receivable right of intangible assets is similar to the warrant of bonds with warrant in the point of view of a 'receivable right' at a specific point of the future. However, the warrant in bonds with warrant (BW) is the right of financial products, such as securities issued on the premise of 'interest income' that the right receivable in the future with respect to securities, such as 'shares, credits and exchanges', is settled to object products, or 'dividend income' generated from shares to be undertaken in the future. Additionally, in case of the intangible assets, the receivable right is unappreciated without transfer or partitioned registration of ownership.

### [Patent Literature]

### [Patent Documents]

Patent Document 1: Korean Patent Publication No. 10-2000-0012802
Patent Document 2: Korean Patent Publication No. 10-2007-0015647
Patent Document 3: Korean Patent Publication No. 10-2018-0020389

### [Disclosure]

### [Technical Problem]

Accordingly, the present invention has been made in view of the above-mentioned problems occurring in investment in intangible assets, transaction market conditions, and the prior art, and it is an object of the present invention to provide an online sharing system for a warrant to receive and a sharing method of receivable right, which property right holders including individuals or companies holding intangible assets can partition and transact profits, for instance, royalty, depending on use of property rights without transfer or partitioned registration of the rights of their own intangible assets to other organizations or groups.

It is another object of the present invention to provide an online sharing system for a warrant to receive and a sharing method of receivable right, which can clearly arrange all taxes to premium as a standard of assessment since making a database (DB) of transaction of rights and allowing tax authorities to receive the database, thereby preventing tax evasion.

It is a further object of the present invention to provide an online sharing system for a warrant to receive and a sharing method of receivable right, which can raise added values created when the transfer difference of premium is increased by adding joint creative activities or sales activities of a number of right buyers to economic activities using intangible assets.

### [Technical Solution]

To accomplish the above object, according to the present invention, there is provided an online sharing system for a warrant to receive including: an operator server connected in such a way that it is possible to communicate by sending and receiving signals with the wire or wireless communication networks, and including a digital warrant issuing system for issuing a digital warrant substituting for the receivable right including royalty which will be generated in the future by property rights including the intangible assets or the intellectual property rights provided from a digital warrant issuer server, and providing the digital warrant issuer server and a digital warrant resale buyer server, which buys shares from a digital warrant buyer server with a detailed registration page for customer relationship management services and digital warrants, an electronic declaring window of digital warrants, a digital warrant purchase clause disclosure window, a digital warrant purchase clause approval window, a digital warrant transaction system window for allowing a user to select any one among general transaction, auction, and reverse auction, a royalty graded payment system for providing a division account of digital warrants by purchase agents by an arithmetic unit for automatic allotment of a share ratio and for differentially paying royalty by electronic right shares, and a redistribution system for reflecting purchased shares of the digital warrant resale buyer server to an account by automated computing; the digital warrant issuer server operated by a property holder who is an owner of intangible assets or intellectual property rights, connected with the operator server through a wire or wireless communication network, and operated by a person who issued or held the digital warrant, namely, the receivable right which will be generated in the future by the property rights including the intangible assets or the intellectual property rights; the digital warrant buyer server linked to the operator server to buy any one among the digital warrant issued by the operator server and the digital warrant issued by the digital warrant issuer server connected to the operator server, receiving the account of the receivable right generated from the operator server, and operated by a person who receives the receivable right by receiving the account of the receivable right created in the operator server; and a digital warrant resale buyer server connected to the operator server and is operated by a person who buys shares of the digital warrant obtained from the digital warrant buyer server.

The digital warrant is issued by participation conditions, the total sum of limited issues, transaction units, and a total amount of issues inputted to the operator server in connection with the corresponding right details after the operator server receives digital right details of a specific product received from the digital warrant issuer server, or is issued when an issuer of the digital warrant directly manipulates his or her own terminal of the standardized electronic input system provided by the operator server, and shares of the receivable right expected to be given to the holders of the intangible assets or the intellectual property right holders at a specific point of time in the future are divided by a percentage as many as the purchase quantity transferred from the digital warrant resale buyer server operated by participants of new right purchase.

The operator server allows other persons to conveniently and clearly check the digital warrant, which is a transaction target, because additionally providing the receivable right digital disclosure window to disclose the receivable right of the digital warrant provided for the digital warrant buyer server and the digital warrant resale buyer server before conclusion of a contract.

The clause is substituted with a contract by electronic approval of the transaction participants by providing the digital warrant buyer server and the digital warrant resale buyer server participating in purchase with the receivable right of the digital warrant issuer through the digital warrant issuer server before conclusion of the contract.

The operator server provides the digital warrant buyer server, the digital warrant resale buyer server, and the digital warrant issuer server which approved the electronic clause online in connection with the receivable right with information of real time transaction, such as the total amount of issued digital warrants, the transaction unit, transacted quantities, an amount of trade settlement, and a residual quantity of unsettled digital warrants, and allows the transaction participants to select any one among general trade, auction and reverse auction.

The operator server provides the digital warrant issuer server, the digital warrant buyer server and the digital warrant resale buyer server with an exclusive electronic account of the receivable right. The operator server provides the digital warrant issuer server, the digital warrant buyer server and the digital warrant resale buyer server with changes in the transaction quantity by transaction agents whenever the corresponding digital warrants are transacted through the exclusive electronic account for the receivable right in real time. The operator server provides the digital warrant buyer server and the digital warrant resale buyer server with information on shares settled as much as invested capital when the right is purchased through the digital warrant buyer server and the digital warrant resale buyer server after converting the issued shares based on 100% of the issued specific digital warrants into units. The operator server transfers the transaction details including the transacted quantity and price of the corresponding digital warrants to the digital warrant issuer server, the digital warrant buyer server and the digital warrant resale buyer server participating in transaction of the receivable right, in which shares of the digital warrant issuer are divided, in real time using any one among general transaction, auction and reverse auction, and prepares an electronic detailed statement of the receivable right stored and outputted and provides the servers by right transaction agents with the electronic detailed statement.

The operator server is connected through the wire and wireless communication network, and provides an electronic royalty payment system linked with an electronic account including an operator account, which receives shares of the receivable right by transaction of the digital warrant, and an electronic account including a digital warrant issuer account, and the electronic payment system may be an ordinarily electric payment system.

The electronic account includes a royalty sharing account that all of the transaction participants of the corresponding right share royalty by a specific right in proportional distribution as much as the share ratio in relation with the specific right that all transaction agents receive shares divided based on 100% of the digital warrants.

The operator server includes an electronic money payment system which is a payment system for buying the receivable right, namely, the right to receive royalty for a holder of the intangible assets or an intellectual property right holder, and an electronic transfer payment system for electronically transferring and sending reserve money of each country, and if the buyers buy the receivable right, they can select and use any one among the buyer server and the operator server using the buyer server.

In another aspect of the present invention, there is provided a sharing method of the receivable right including: a property right information transferring step of transferring information on the property right including intangible assets or intellectual property rights to the operator server by the digital warrant issuer server; a digital warrant issuing step of issuing a digital warrant that a receivable right including royalty, which will be generated in the future in relation with the property right information received from the digital warrant issuer server, is registered by an electronic method; an electronic money issuing step of issuing electronic money corresponding to the digital warrant issued by the operator server; an information registering step of registering information of the digital warrant issued by the operator server and electronic money information to the server; an electronically declaring step of declaring registered information of the digital warrant and the registered electronic money information online by the operator server; a purchase clause disclosing step of disclosing the purchase clause of the digital warrant online by the operator server; a clause approving step of receiving the purchase clause of the digital warrant disclosed online from the digital warrant issuer server, the digital warrant buyer server, and the digital warrant resale buyer server and approving the purchase clause by the operator server; a digital warrant transacting step of allowing the digital warrant buyer server and the digital warrant resale buyer server to sell and buy shares of the receivable right given to the digital warrant in relation to the digital warrant disclosed online, and of registering the shares; a share confirming and account creating step of confirming the shares of the receivable right given to the digital warrant of which transaction is finished, dividing the receivable right, and creating an account; and a settlement step of paying the price for the receivable right of the digital warrant divided in shares.

### [Advantageous Effects]

As described above, the online sharing system for a warrant to receive and the sharing method of receivable right according to the present invention can allow property right holders including individuals or companies holding intangible assets to partition and transact profits, for instance, royalty, depending on use of property rights without transfer or partitioned registration of the rights of their own intangible assets to other organizations or groups.

Moreover, the online sharing system for a warrant to receive and the sharing method of receivable right according to the present invention can clearly arrange all taxes to premium as a standard of assessment since making a database (DB) of transaction of rights and allowing tax authorities to receive the database, thereby preventing tax evasion.

Furthermore, the online sharing system for a warrant to receive and the sharing method of receivable right according to the present invention can raise added values when the transfer difference of premium is increased by adding joint creative activities or sales activities of a number of right buyers to economic activities using intangible assets in relation with original right holders' property rights in order to increase the right buyers' profits.

### [Description of Drawings]

FIG. 1 is a configurative diagram of an online sharing system for a warrant to receive according to the present invention.

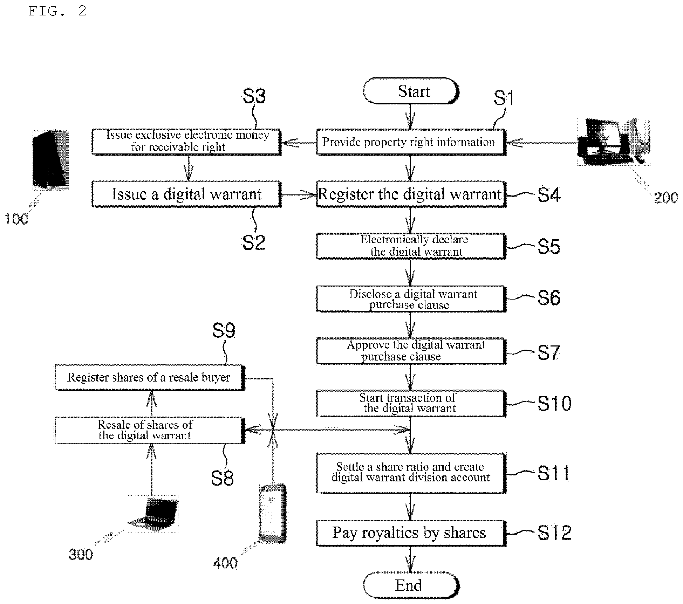

FIG. 2 is a view showing an online sharing process of a receivable right using the online sharing system for a warrant to receive according to the present invention.

### [Mode for Invention]

The invention can be modified in various forms and can have various embodiments. Specific embodiments will be illustrated in the drawings and described in detail. However, the embodiments are not intended to limit the invention, but it should be understood that the invention includes all modifications, equivalents, and replacements belonging to the concept and the technical scope of the invention.

In the attached drawings, similar components have similar reference numerals even though they are illustrated in different figures. When it is determined that detailed description of known techniques involved in the invention makes the gist of the invention obscure, the detailed description thereof will not be made

The online sharing system for a warrant to receive and the sharing method of receivable right according to the present invention can allow property right holders including individuals or companies holding intangible assets to separately partition and transact profits, namely, the price of a receivable right, without transfer or partitioned registration of the rights of their own intangible assets to other organizations or groups and specific individuals.

In the present invention, intangible assets include patent rights, utility model rights, design rights, trademark rights, copyrights, layout rights, publicity rights, franchise rights, fishing rights, mining rights, and so on, which belong to intellectual property rights.

In general, holders having intangible assets or intellectual property right holders may request patent division registration or joint registration of copyright if the third parties who invest capital to natural rights of the corresponding intellectual property right as necessary want joint ownership of the corresponding intangible assets in return for investment to the corresponding intellectual property right or support of marketing. If the intellectual property rights, such as patent rights, trademark rights, and copyrights, are jointly divided to many people, there must be 100% agreement of the joint persons entitled to registration in relation with transfer of license or rights of the corresponding property rights to the third parties according to the "civil law" and the "commercial law".

That is, because the property rights of the corresponding intangible assets are jointly registered to a number of third parties as co-owned shares, if any one among the jointly registered right holders objects, it is prohibited or limited to broadcast the corresponding contents or post the corresponding contents on the Internet. Therefore, if many people are jointly registered right holders of the corresponding intellectual property rights, the intellectual property right holders' inherent licenses may be limited or it may be limited or prohibited to exercise the corresponding property rights if the joint right registration exceeds creators' original intentions due to opposing interests among the joint right holders.

In this invention, the warrant to receive means a receivable right in relation to royalty income, such as usage fees, royalties, which may be generated at a specific point of the future in connection with the corresponding intellectual property rights or intangible assets, without partitioned registration or transfer of the property right holder's right after lending the third parties the intangible assets, such as intellectual property rights, franchise rights, fishing rights, mining rights, and so on, in order to allow the third parties to use them.

The present invention can allow holders of intangible assets or right holders to share only the receivable right of royalty which will be generated in the future by the corresponding intellectual property rights or intangible assets. That is, the present invention separately divides only the receivable right of royalty in relation with sales or business profits generated by lending the corresponding intangible assets to the third party, issues electronic money, and issues digital warrants that shares by buyers are split. In this instance, the third party bought the issued digital warrants can receive royalty of the intangible assets or the corresponding property rights of the intellectual property rights due to use of the right holders or the third parties.

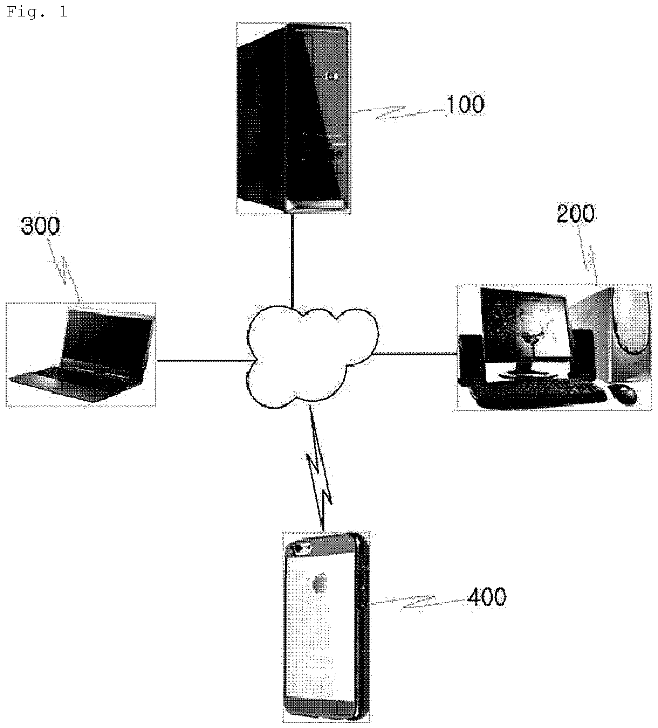

As shown in FIG. 1, the online sharing system for a warrant to receive according to the present invention includes an operator server 100, a digital warrant issuer server 200, a digital warrant buyer server 300, and a digital warrant resale buyer server 400.

Of course, the servers can send and receive information on the transacted receivable rights because being connected with one another through wire or wireless communication networks.

The operator server 100 is connected in such a way that it is possible to communicate by sending and receiving signals with the wire or wireless communication networks, and includes a digital warrant issuing system for issuing a digital warrant substituting for the receivable right including royalty which will be generated in the future by property rights including the intangible assets or the intellectual property rights provided from the digital warrant issuer server 200, and provides the digital warrant issuer server 200 and the digital warrant resale buyer server 400, which buys shares from the digital warrant buyer server 30 with a detailed registration page for customer relationship management services and digital warrants, an electronic declaring window of digital warrants, a digital warrant purchase clause disclosure window, a digital warrant purchase clause approval window, a digital warrant transaction system window for allowing a user to select any one among general transaction, auction, and reverse auction, a royalty graded payment system for providing a division account of digital warrants by purchase agents by an arithmetic unit for automatic allotment of a share ratio and for differentially paying royalty by electronic right shares, and a redistribution system for reflecting purchased shares of the digital warrant resale buyer server to an account by automated computing.

The digital warrant issuer server 200 is operated by a property holder who is an owner of intangible assets or intellectual property rights, is connected with the operator server 100 through the wire or wireless communication network, and is a server operated by a person who issued or held the digital warrant, namely, the receivable right which will be generated in the future by the property rights including the intangible assets or the intellectual property rights.

The digital warrant buyer server 300 is linked to the operator server 100 to buy any one among the digital warrant issued by the operator server 100 and the digital warrant issued by the digital warrant issuer server 200 connected to the operator server 100, and is a server which receives the account of the receivable right generated from the operator server 100 and is operated by a person who receives the receivable right by receiving the account of the receivable right created in the operator server 100. The digital warrant resale buyer server 400 is connected to the operator server 100 and is operated by a person who buys shares of the digital warrant obtained from the digital warrant buyer server 300.

Of course, each of the servers has a wire or wireless terminal connected to the servers.

After the operator server 100 receives digital right details of a specific product received from the digital warrant issuer server 200, the digital warrant is issued by participation conditions, the total sum of limited issues, transaction units, and a total amount of issues inputted to the operator server 100 in connection with the corresponding right details.

Another digital warrant can be issued when an issuer of the digital warrant directly manipulates his or her own terminal of the standardized electronic input system provided by the operator server 100.

Shares of the receivable right expected to be given to the holders of the intangible assets or the intellectual property right holders at a specific point of time in the future are divided by a percentage as many as the purchase quantity transferred from the digital warrant resale buyer server 400 operated by participants of new right purchase.

That is, if sales or business gains are generated by the third parties who used the digital warrant of the corresponding intellectual property rights or the intangible assets, a ratio of the royalty is set, the shares of the receivable right is divided to the third party in proportional distribution of the issued digital warrants according to sizes of purchased capital of the transaction participants, based on the entire of 100%, and the whole purchase price is distributed as much as the size of the purchased shares in proportion to the capital that the transaction participants invested. Therefore, only the receivable right of royalty which will be generated in the future can be transacted and resold without being infringed by the third parties in inherent license, rental and assignment of intellectual property right of a creator or ownership of intangible assets.

The operator server 100 allows other persons to conveniently and clearly check the digital warrant, which is a transaction target, because additionally providing the receivable right digital disclosure window to disclose the receivable right of the digital warrant provided for the digital warrant buyer server 300 and the digital warrant resale buyer server 400 before conclusion of a contract.

Moreover, the operator server 100 provides a digital warrant purchase clause, and the clause may be substituted with a contract by electronic approval of the transaction participants by providing the digital warrant buyer server 300 and the digital warrant resale buyer server 400 participating in purchase with the receivable right of the digital warrant issuer through the digital warrant issuer server 200 before conclusion of the contract.

Preferably, the operator server 100 provides the digital warrant buyer server 300, the digital warrant resale buyer server 400, and the digital warrant issuer server 200 which approved the electronic clause online in connection with the receivable right with information of real time transaction, such as the total amount of issued digital warrants, the transaction unit, transacted quantities, an amount of trade settlement, and a residual quantity of unsettled digital warrants.

Furthermore, it is preferable that the operator server 100 allow the transaction participants to select any one among general trade, auction and reverse auction and use a desired transaction method.

Additionally, the operator server 100 provides the digital warrant issuer server 200, the digital warrant buyer server 300 and the digital warrant resale buyer server 400 with an exclusive electronic account of the receivable right, provides the digital warrant issuer server 200, the digital warrant buyer server 300 and the digital warrant resale buyer server 400 with changes in the transaction quantity by transaction agents whenever the corresponding digital warrants are transacted through the exclusive electronic account for the receivable right in real time, and provides the digital warrant buyer server 300 and the digital warrant resale buyer server 400 with information on shares settled as much as invested capital when the right is purchased through the digital warrant buyer server 300 and the digital warrant resale buyer server 400 after converting the issued shares based on 100% of the issued specific digital warrants into units.

In addition, the operator server 100 transfers the transaction details including the transacted quantity and price of the corresponding digital warrants to the digital warrant issuer server 200, the digital warrant buyer server 300 and the digital warrant resale buyer server 400 participating in transaction of the receivable right, in which shares of the digital warrant issuer are divided, in real time using any one among general transaction, auction and reverse auction, and prepares an electronic detailed statement of the receivable right stored and outputted and provides the servers by right transaction agents with the electronic detailed statement.

The operator server 100 is connected through the wire and wireless communication network, and may provide an electronic royalty payment system linked with an electronic account including an operator account, which receives shares of the receivable right by transaction of the digital warrant, and an electronic account including a digital warrant issuer account, and the electronic payment system may be an ordinarily electric payment system.

Preferably, the electronic account includes a royalty sharing account that all of the transaction participants of the corresponding right share royalty by a specific right in proportional distribution as much as the share ratio in relation with the specific right that all transaction agents receive shares divided based on 100% of the digital warrants.

The operator server 100 includes an electronic money payment system which is a payment system for buying the receivable right, and an electronic transfer payment system for electronically transferring and sending reserve money of each country. Therefore, if the buyers buy the receivable right, they can select and use any one among the buyer server and the operator server 100.

Of course, the electronic money payment system and the electronic transfer payment system are similar to the ordinary payment system, but it would be understood sufficiently that they can be changed in response to the receivable right of the digital warrants.

Hereinafter, a sharing method using the online sharing system for a warrant to receive according to the present invention will be described.

The sharing method of the receivable right includes: a property right information transferring step (S1) of transferring information on the property right including intangible assets or intellectual property rights to the operator server 100 by the digital warrant issuer server 200; a digital warrant issuing step (S2) of issuing a digital warrant that a receivable right including royalty, which will be generated in the future in relation with the property right information received from the digital warrant issuer server 200, is registered by an electronic method; an electronic money issuing step (S3) of issuing electronic money corresponding to the digital warrant issued by the operator server 100; an information registering step (S4) of registering information of the digital warrant issued by the operator server 100 and electronic money information to the server; an electronically declaring step (S5) of declaring registered information of the digital warrant and the registered electronic money information online by the operator server 100; a purchase clause disclosing step (S6) of disclosing the purchase clause of the digital warrant online by the operator server; a clause approving step (S7) of receiving the purchase clause of the digital warrant disclosed online from the digital warrant issuer server 200, the digital warrant buyer server 300, and the digital warrant resale buyer server 400 and approving the purchase clause by the operator server 100; a digital warrant transacting step (S10) of allowing the digital warrant buyer server 300 and the digital warrant resale buyer server 400 to sell and buy shares of the receivable right given to the digital warrant in relation to the digital warrant disclosed online (S8), and of registering the shares; a share confirming and account creating step (S11) of confirming the shares of the receivable right given to the digital warrant of which transaction is finished, dividing the receivable right, and creating an account; and a settlement step (S12) of paying the price for the receivable right of the digital warrant divided in shares.

The property right information transferred in the property right transferring step (S1) may be varied according to kinds of property rights, but the property right basically includes information of a current value, an owner, and details of changed right.

The digital warrant issuing step (S2) is to set the receivable right including royalty which will be generated in the future in relation to the property right which is an object for issue of the digital warrant transferred from the digital warrant issuer server 200. When the digital warrant is issued, it is preferable that the issuer of the digital warrant issuer server 200 makes an inherent mark to the corresponding product not to confuse his or her digital warrant with digital warrants of other persons who are participating in the transaction.

The electronic money issuing step (S3) is to issue money for transacting the digital warrants. It is preferable to use the title of the corresponding digital warrant so that the issuer of the corresponding digital warrant or all persons who are participating in transaction, such as assignment, resale buying and resale purchase, of the digital warrant not to confuse their digital warrants with other persons' digital warrants.

Moreover, the issuing agent of the digital warrant is limited to the operator server 100, but the operator server 100 may do issue of the digital warrant for the property right holder, who is an operator of the digital warrant issuer server 200, or the property right holder who connects to the digital warrant issuer server 200 may directly issue the digital warrant according to the format and electronic money provided from the operator server 100.

The electronic money is money used for preventing that the property right holder and a number of the transaction participants confuse their own products with others' intangible assets or intellectual property rights and use them mingled with others' property rights during transaction of the digital warrants, and solving inconvenience due to movement between remote places caused when transaction participants using their own smart devices through the wire and wireless communication network has to visit a bank or other places to use cash.

The electronic money is an electronic payment means that bank deposits or cash (money) are stored in an IC card or a computer connected to a network by an electronic method. The electronic payment means which substitutes for cash may be one among digital cash, cyber cash, and E-cash, and the electronic money must have a value of one-to-one exchange with reserve money of each country.

It is preferable that the electronic money be issued with the value of one-to-one exchange with currencies of countries from the electronic money issuing step. Differently from virtual money depending on mining, if the number of issuers and buyers is increased by market demanders and suppliers, an issued amount of the electronic money for the receivable right is continuously increased, and there is an exchange value in relation with other goods and services, it may cause inflation in the corresponding country since an expected increase of an amount of currency is included in the amount of currency of reserve money. Therefore, the electronic money must have the one-to-one exchange value with each country's currency in order to prevent such inflation.

The information registering step (S4) is to store and register information of the issued digital warrant so that the operator server 100, the digital warrant issuer server 200, the digital warrant buyer server 300 and the digital warrant resale buyer server 400 can check it.

The electronically declaring step (S5) is to declare the registered information online so that the user can see the information through the operator server 100, the digital warrant issuer server 200, the digital warrant buyer server 300 and the digital warrant resale buyer server 400.

The purchase clause disclosing step (S6) is to disclose contents related with transaction of the registered digital warrant. Therefore, a 'receivable right details' in which used places of the corresponding intangible assets, how to use, a used period, collection of royalties, how to issue electronic money for division of right are described in detail may be disclosed, and the electronic clause is releasable, and a contract may be substituted with an action to buy specific electronic money after agreement to the clause.

The clause approving step (S7) is to judge the transaction is achieved by actions that contractors who read the transaction clause approves the clause and buy electronic money with respect to the corresponding digital warrant.

The digital warrant transacting step (S10) is to allow the digital warrant buyer server 300 and the digital warrant resale buyer server 400 to sell and buy (S8) shares of the receivable right given to the digital warrant disclosed online after approval of the clause, and to register the shares (S9).

The share confirming and account creating step (S11) is a step of dispersing the share rate of the corresponding digital warrant or the digital warrants to each account according to transaction details formed in the digital warrant transacting step (S10), and in this instance, disperses and records to electronic accounts including an operator account and a digital warrant issuer account.

The settlement step (S12) is to pay the price for the receivable right which was distributed according to the distribution ratio and dispersed to the accounts.

The person who purchased electronic money is a right buyer who will receive royalty, and the person who purchased electronic money can resell the corresponding right to the third party, and new buyers or resale buyers who bought 100% of the electronic money issued first are replaced by an automated computing method.

Furthermore, in case of the digital warrant accounts of sellers and resale sellers, based on 100% shares of the corresponding electronic money, the shares are reduced by a sold amount of the corresponding right and the receivable right is cancelled.

The pay generated by royalties in relation with use of the corresponding right provided from the digital warrant issuer (intellectual property right holder, holder of intangible assets, and others) server is divided as much as shares holdings of the corresponding electronic money and is provided to the digital warrant buyer server of the person who bought the right to receive new royalty from the holder of the intangible assets in proportion to the shares of the electronic money distributed to the corresponding digital warrant account by the above division method.

## Claims

1. An online sharing system for a warrant to receive comprising:
an operator server connected in such a way that it is possible to communicate by sending and receiving signals with the wire or wireless communication networks, and including a digital warrant issuing system for issuing a digital warrant substituting for the receivable right including royalty which will be generated in the future by property rights including the intangible assets or the intellectual property rights provided from a digital warrant issuer server, and providing the digital warrant issuer server and a digital warrant resale buyer server, which buys shares from a digital warrant buyer server with a detailed registration page for customer relationship management services and digital warrants, an electronic declaring window of digital warrants, a digital warrant purchase clause disclosure window, a digital warrant purchase clause approval window, a digital warrant transaction system window for allowing a user to select any one among general transaction, auction, and reverse auction, a royalty graded payment system for providing a division account of digital warrants by purchase agents by an arithmetic unit for automatic allotment of a share ratio and for differentially paying royalty by electronic right shares, and a redistribution system for reflecting purchased shares of the digital warrant resale buyer server to an account by automated computing;
the digital warrant issuer server operated by a property holder who is an owner of intangible assets or intellectual property rights, connected with the operator server through a wire or wireless communication network, and operated by a person who issued or held the digital warrant, namely, the receivable right which will be generated in the future by the property rights including the intangible assets or the intellectual property rights;
the digital warrant buyer server linked to the operator server to buy any one among the digital warrant issued by the operator server and the digital warrant issued by the digital warrant issuer server connected to the operator server, receiving the account of the receivable right generated from the operator server, and operated by a person who receives the receivable right by receiving the account of the receivable right created in the operator server; and
a digital warrant resale buyer server connected to the operator server and is operated by a person who buys shares of the digital warrant obtained from the digital warrant buyer server.

2. The online sharing system according to claim 1, wherein the digital warrant is issued by participation conditions, the total sum of limited issues, transaction units, and a total amount of issues inputted to the operator server in connection with the corresponding right details after the operator server receives digital right details of a specific product received from the digital warrant issuer server, or is issued when an issuer of the digital warrant directly manipulates his or her own terminal of the standardized electronic input system provided by the operator server, and
Wherein shares of the receivable right expected to be given to the holders of the intangible assets or the intellectual property right holders at a specific point of time in the future are divided by a percentage as many as the purchase quantity transferred from the digital warrant resale buyer server operated by participants of new right purchase.

3. The online sharing system according to claim 1, wherein the operator server allows other persons to conveniently and clearly check the digital warrant, which is a transaction target, because additionally providing the receivable right digital disclosure window to disclose the receivable right of the digital warrant provided for the digital warrant buyer server and the digital warrant resale buyer server before conclusion of a contract.

4. The online sharing system according to claim 1, wherein the clause is substituted with a contract by electronic approval of the transaction participants by providing the digital warrant buyer server and the digital warrant resale buyer server participating in purchase with the receivable right of the digital warrant issuer through the digital warrant issuer server before conclusion of the contract.

5. The online sharing system according to claim 1, wherein the operator server provides the digital warrant buyer server, the digital warrant resale buyer server, and the digital warrant issuer server which approved the electronic clause online in connection with the receivable right with information of real time transaction, such as the total amount of issued digital warrants, the transaction unit, transacted quantities, an amount of trade settlement, and a residual quantity of unsettled digital warrants, and allows the transaction participants to select any one among general trade, auction and reverse auction.

6. The online sharing system according to claim 1, wherein the operator server provides the digital warrant issuer server, the digital warrant buyer server and the digital warrant resale buyer server with an exclusive electronic account of the receivable right,
wherein the operator server provides the digital warrant issuer server, the digital warrant buyer server and the digital warrant resale buyer server with changes in the transaction quantity by transaction agents whenever the corresponding digital warrants are transacted through the exclusive electronic account for the receivable right in real time,
wherein the operator server provides the digital warrant buyer server and the digital warrant resale buyer server with information on shares settled as much as invested capital when the right is purchased through the digital warrant buyer server and the digital warrant resale buyer server after converting the issued shares based on 100% of the issued specific digital warrants into units, and
wherein the operator server transfers the transaction details including the transacted quantity and price of the corresponding digital warrants to the digital warrant issuer server, the digital warrant buyer server and the digital warrant resale buyer server participating in transaction of the receivable right, in which shares of the digital warrant issuer are divided, in real time using any one among general transaction, auction and reverse auction, and prepares an electronic detailed statement of the receivable right stored and outputted and provides the servers by right transaction agents with the electronic detailed statement.

7. The online sharing system according to claim 1, wherein the operator server is connected through the wire and wireless communication network, and provides an electronic royalty payment system linked with an electronic account including an operator account, which receives shares of the receivable right by transaction of the digital warrant, and an electronic account including a digital warrant issuer account, and the electronic payment system may be an ordinarily electric payment system.

8. The online sharing system according to claim 7, wherein the electronic account includes a royalty sharing account that all of the transaction participants of the corresponding right share royalty by a specific right in proportional distribution as much as the share ratio in relation with the specific right that all transaction agents receive shares divided based on 100% of the digital warrants.

9. The online sharing system according to claim 1, wherein the operator server includes an electronic money payment system which is a payment system for buying the receivable right, namely, the right to receive royalty for a holder of the intangible assets or an intellectual property right holder, and an electronic transfer payment system for electronically transferring and sending reserve money of each country, and if the buyers buy the receivable right, they can select and use any one among the buyer server and the operator server using the buyer server.

10. A sharing method of the receivable right comprising:
a property right information transferring step of transferring information on the property right including intangible assets or intellectual property rights to the operator server by the digital warrant issuer server;
a digital warrant issuing step of issuing a digital warrant that a receivable right including royalty, which will be generated in the future in relation with the property right information received from the digital warrant issuer server, is registered by an electronic method;
an electronic money issuing step of issuing electronic money corresponding to the digital warrant issued by the operator server;
an information registering step of registering information of the digital warrant issued by the operator server and electronic money information to the server;
an electronically declaring step of declaring registered information of the digital warrant and the registered electronic money information online by the operator server;
a purchase clause disclosing step of disclosing the purchase clause of the digital warrant online by the operator server;
a clause approving step of receiving the purchase clause of the digital warrant disclosed online from the digital warrant issuer server, the digital warrant buyer server, and the digital warrant resale buyer server and approving the purchase clause by the operator server;
a digital warrant transacting step of allowing the digital warrant buyer server and the digital warrant resale buyer server to sell and buy shares of the receivable right given to the digital warrant in relation to the digital warrant disclosed online, and of registering the shares;
a share confirming and account creating step of confirming the shares of the receivable right given to the digital warrant of which transaction is finished, dividing the receivable right, and creating an account; and
a settlement step of paying the price for the receivable right of the digital warrant divided in shares.
